Europäisches Patentamt

European Patent Office

Office européen des brevets

(11) Veröffentlichungsnummer: **0 141 801**
**B1**

(12) **EUROPÄISCHE PATENTSCHRIFT**

(45) Veröffentlichungstag der Patentschrift:
04.02.87

(21) Anmeldenummer: 84890170.8

(22) Anmeldetag: 12.09.84

(51) Int. Cl.⁴: **B 27 D 3/00**

(54) Plattenpresse.

(30) Priorität: 14.09.83 AT 3268/83

(43) Veröffentlichungstag der Anmeldung:
15.05.85 Patentblatt 85/20

(45) Bekanntmachung des Hinweises auf die Patenterteilung:
04.02.87 Patentblatt 87/6

(84) Benannte Vertragsstaaten:
BE CH DE FR LI NL SE

(56) Entgegenhaltungen:
US-A-4 258 766

(73) Patentinhaber: Steinkogler, Rudolf, Breinfeld 10,
A-4531 Kematen/Krems (AT)

(72) Erfinder: Steinkogler, Rudolf, Breinfeld 10, A-4531
Kematen/Krems (AT)

(74) Vertreter: Hübscher, Gerhard, Dipl.- Ing.,
Patentanwälte Dipl.- Ing. Gerhard Hübscher
Dipl.- Ing. Helmut Hübscher Dipl.- Ing. Heiner
Hübscher Spittelwiese 7, A-4020 Linz (AT)

EP 0 141 801 B1

## Beschreibung

Die Erfindung betrifft eine Plattenpresse, bestehend aus einem Rahmengestell mit zwei relativ zueinander beweglichen Druckplatten, wobei vorzugsweise die untere, die Auflagedruckplatte mittels aufblasbarer, sich über eine Grundplatte gegebenenfalls unter Zwischenlage von Distanzstücken am Rahmengestell abstützender Luftschläuche od. dgl. gegen die obere, die Gegendruckplatte druckbeaufschlagbar ist.

Plattenpressen zum Furnieren oder Verleimen von Holzteilen gehören zur Grundeinrichtung von Tischlerwerkstätten und Holzbearbeitungsbetrieben und sind, bedingt durch die entsprechend dimensionierten Preßplatten und das stabile Rahmengestell, doch recht großräumige Maschinen, wobei die zueinander relativbeweglich im Rahmengestell eingesetzten Preßplatten die zu furnierenden oder zu verleimenden Gegenstände zwischen sich aufnehmen und zum Aufbringen des Preßdruckes über Schraubenspindeln oder Hydraulikzylinder, vor allem aber wegen des geringeren Aufwandes über aufblasbare Luftschläuche od. dgl. druckbeaufschlagbar sind. Neben diesen Plattenpressen zählen außerdem noch Sägeaggregate als Zu- und Formatscheidemaschinen sowie Bandschleifmaschinen für ein Flächenschleifen zu einer solchen Grundeinrichtung, und es ist bereits bekannt, diese Säge- und Schleifmaschinen zu Mehrzweck-Holzbearbeitungsmaschinen zusammenzufassen. Allerdings verlangen die Mehrzweck-Holzbearbeitungsmaschinen ebenfalls ein vergleichsweise aufwendiges Maschinengestell und nehmen entsprechend viel wertvollen Platz für sich in Anspruch, so daß es oft schwierig ist, die Plattenpresse und die als Einzelmaschinen oder als Mehrzweckmaschinen vorhandenen Säge- und Schleifmaschinen funktionsgerecht unterzubringen.

Der Erfindung liegt daher die Aufgabe zugrunde, diese Mängel zu beseitigen und eine Plattenpresse der eingangs geschilderten Art zu schaffen, die es auf rationelle Weise ermöglicht, bei der Aufstellung von Presse, Kreissäge und Bandschleifmaschine eine optimale Raumausnutzung zu erreichen und den erforderlichen Mehraufwand für Säge- und Schleifmaschine zu senken.

Die Erfindung löst diese Aufgabe dadurch, daß das Rahmengestell eine oberseitige Arbeitsfläche bildet, der als Zusatzausstattung ein Kreissägeaggregat und/oder eine Bandschleifmaschine zugeordnet sind. Es ergibt sich eine besonders vorteilhafte Konstruktion, wenn das Kreissägeaggregat entlang der Arbeitsfläche längsverschiebbar geführt und auf die Arbeitsfläche ein querverschiebbarer Werkstückschlitten für die höhenverstellbar am Rahmengestell gelagerte Bandschleifmaschine aufsetzbar ist.

Es entsteht eine Maschinenkombination, die praktisch nicht mehr Platz benötigt als eine Presse allein und dennoch die wichtigsten Arten der Holzbearbeitungsmaschinen in sich vereinigt, wobei die längsverschiebbare Säge sogar ein Format- und Furnierschneiden erlaubt. Darüber hinaus bietet das Rahmengestell für Säge- und Schleifmaschine eine besonders feste Arbeitsfläche, die wegen der Höhenverstellbarkeit der Schleifmaschine nicht selbst verstellbar zu sein braucht, und es erübrigt sich jedes zusätzliche Maschinengestell.

In der Zeichnung ist der Erfindungsgegenstand in einem Ausführungsbeispiel rein schematisch dargestellt, und zwar zeigen die

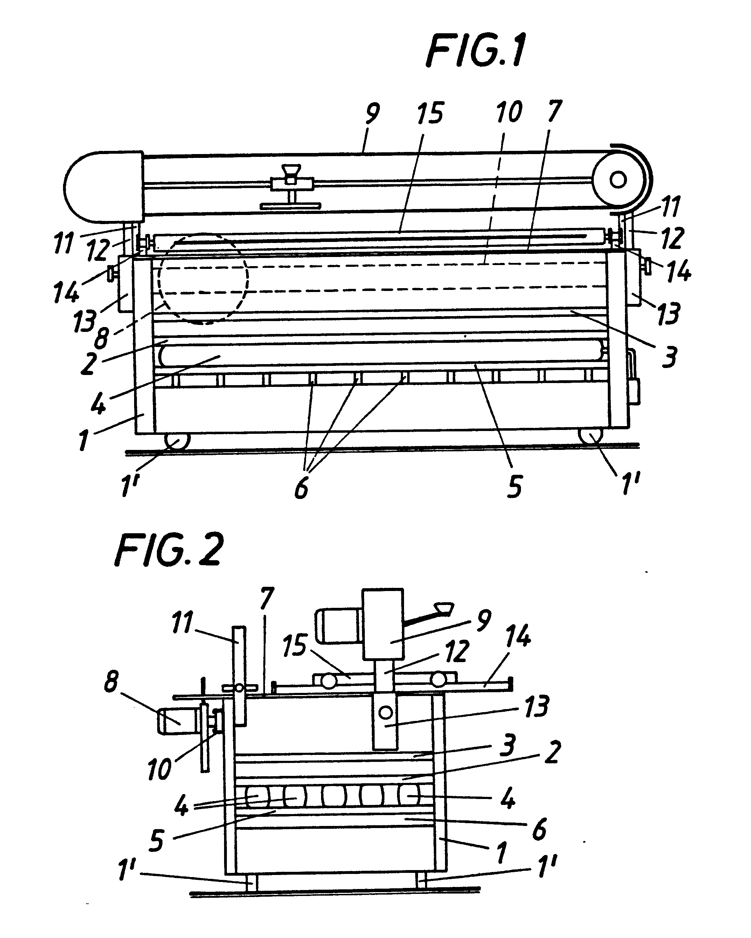

Fig. 1 und 2 eine erfindungsgemäße Plattenpresse in Seitenansicht und Stirnansicht.

Ein Rahmengestell 1, das sich über Laufrollen 1' am Boden abstützt, nimmt eine untere Auflagedruckplatte 2 und eine obere Gegendruckplatte 3 auf, wobei die Gegendruckplatte 3 fest im Rahmengestell 1 sitzt und die beweglich gehaltene Auflagedruckplatte 2 mittels aufblasbarer Luftschläuche 4 in Richtung zur Gegendruckplatte 3 druckbeaufschlagt werden kann. Die Luftschläuche 4 stützen sich über eine Grundplatte 5 ebenfalls am Rahmengestell 1 ab und zwischengelegte Distanzstücke 6 ermöglichen eine Anpassung des Preßspaltes zwischen Auflagedruckplatte 2 und Gegendruckplatte 3 an die Höhe der zwischen diesen Platten zu pressenden Gegenstände.

Das Rahmengestell 1 bildet an der Oberseite eine weitere Arbeitsfläche 7, der als Zusatzausstattung ein Kreissägeaggregat 8 und eine Bandschleifmaschine 9 zugeordnet sind. Das Kreissägeaggregat 8 ist in Führungsschienen 10 der Arbeitsfläche 7 entlang verschiebbar und erlaubt ein Beschneiden von auf die Arbeitsfläche 7 aufgelegten Holzteilen od. dgl., die über eine Klemmeinrichtung 11 auf der Arbeitsfläche 7 festgespannt werden können. Parallel zur Sägerichtung verläuft die Bandschleifmaschine 9, die über Stützarme 12 höhenverstellbar in Konsolen 13 des Rahmengestells 1 befestigt ist. Ein in Querschienen 14 geführter Werkstückschlitten 15 erlaubt ein rationelles Schleifen auch großflächiger Werkstücke, wobei dieser Werkstückschlitten 15 abnehmbar ist, um die Arbeitsfläche 7 beispielsweise für Sägearbeiten freizumachen.

Die erfindungsgemäße Plattenpresse ergibt eine aufwandsarme und platzsparende Kombination von Presse, Säge- und Schleifmaschinen, so daß auf zweckmäßige Weise eine Holzbearbeitungsmaschine entsteht, die für sich alleine bereits die Grundeinrichtung einer Tischlerei od. dgl. sein kann und das Herstellen von Holzgegenständen, wie Möbelstücke, erlaubt. Selbstverständlich wäre es auch durchaus möglich, mit der Presse jeweils nur eines der Zusatzgeräte zu kombinieren. Es ist möglich, statt der pneumatischen Presse eine hydraulische Presse oder eine Spindelpresse zu verwenden.

## Patentansprüche

1. Plattenpresse, bestehend aus einem Rahmengestell (1) mit zwei relativ zueinander beweglichen Druckplatten (2, 3), wobei vorzugsweise die untere, die Auflagedruckplatte (2) mittels aufblasbarer, sich über eine Grundplatte (5) gegebenenfalls unter Zwischenlage von Distanzstücken (6) am Rahmengestell (1) abstützender Luftschläuche od. dgl. gegen die obere, die Gegendruckplatte (3) druckbeaufschlagbar ist, dadurch gekennzeichnet, daß das Rahmengestell (1) eine oberseitge Arbeitsfläche (7) bildet, der als Zusatzausstattung ein Kreissägeaggregat (8) und/oder eine Bandschleifmaschine (9) zugeordnet sind.

2. Plattenpresse nach Anspruch 1, dadurch gekennzeichnet, daß das Kreissägeaggregat (8) entlang der Arbeitsfläche (7) längsverschiebbar geführt und auf die Arbeitsfläche (7) ein querverschiebbarer Werkstückschlitten (15) für die höhenverstellbar am Rahmengestell (1) gelagerte Bandschleifmaschine aufsetzbar ist.

## Claims

1. A plate press comprising a frame (1) provided with two platens (2, 3), which are movable relative to each other, wherein preferably the supporting lower platen (2) is adapted to be urged by pressure against the upper backpressure platen (3) by means of pneumatic hoses or the like, which are supported by the frame (1) by means of a baseplate (5) and optionally with spacers (6) interposed, characterized in that the frame (1) constitutes at its top a working surface (7), with which accessory means consisting of a circular saw unit (8) and/or a belt grinding machine (9) are associated.

2. A plate press according to claim 1, characterized in that the circular saw unit (8) is guided to be displaceable along the working surface (7) and a transversely displaceable workpiece carriage (15) for the belt grinding machine, which is mounted on the frame (1) for an adjustment in height, is adapted to be placed on the working surface (7).

## Revendications

1. Presse à plateaux se composant d'un châssis formant bâti avec deux plateaux (2, 5) de pression mobiles l'un vers l'autre, tandis que, de préférence, le plateau inférieur (2) d'appui de pression, peut être placé sous pression et appliqué contre le plateau supérieur (3) de pression antagoniste au moyen de boyaux pneumatiques ou analogues pouvant être gonflés et prenant appui, le cas échéant avec position de pièces (6) d'écartement, par l'intermédiaire d'une plaque (5) de base sur le châssis (1) formant bâti, caractérisé par le fait que le châssis (1) formant bâti forme du côté supérieur un plan (7) de travail auquel peuvent être affectés en équipement de complément un groupe (8) à scie circulaire et/ou une ponçeuse (9) à bande.

2. Presse à plateaux suivant la revendication 1, caractérisé par le fait que le groupe (8) à scie circulaire est guidé en pouvant être glissé dans le sens de la longueur du plan (7) de travail et qu'un chariot (15) porte-pièce d'usinage pouvant coulisser dans le sens transversal peut être placé sur le plan (7) de travail pour la ponçeuse (9) à bande montée sur le châssis (1) formant bâti, de manière à pouvoir être positionnée en hauteur.

# FIG.1

# FIG. 2